# EUROPEAN PATENT APPLICATION

(11) **EP 4 654 426 A1**
(43) Date of publication of application: **26.11.2025**
(21) Application number: 24744255.1
(22) Date of filing: 16.01.2024
(51) Int. Cl.: H02J 7/00, H04N 1/00

(54) **CHARGING CASE AND PHOTOGRAPHING DEVICE**

(30) Priority: 18.01.2023 CN 202320223168 U
(71) Applicant: Arashi Vision Inc., Shenzhen, Guangdong 518000 (CN)
(72) Inventor: ZHANG, Guoxing, Shenzhen, Guangdong 518000 (CN); GAO, Fei, Shenzhen, Guangdong 518000 (CN); CHEN, Jun, Shenzhen, Guangdong 518000 (CN)
(74) Representative: Michalski Hüttermann & Partner Patentanwälte mbB
(86) International application number: PCT/CN2024/072589
(87) International publication number: WO 2024/153080

(57) **Abstract**

The embodiments of the present disclosure provides a charging box. The charging box is applicable to a photographing device. The charging box includes a box body and a display screen. The photographing device is detachably accommodated in the box body. The box body is signal-connected to the photographing device, and the box body is configured to control the photographing device for capturing images. The display screen is arranged at one end of the box body. The display screen is electrically connected to the box body, and the display screen is configured to display images captured by the photographing device. The box body is signal-connected to the photographing device. The housing controls the photographing device to capture images through electrical signals, and the display screen is used to display images captured by the photographing device. The photographing device transmits the captured image information to the box body. The box body then transmits the image information to the display screen, and the display screen displays the images captured by the photographing device to provide a photographing preview, which can help the user capture higher quality videos or photos. The embodiments of the present disclosure also provides a photographing apparatus.

## Description

### Technical Field

The embodiments of the present application relate to the field of photographing devices, and particularly relate to a charging box and photographing equipment.

### Background

A charging box is a common electronic product accessory, which is usually used together with devices such as cameras, earphones, etc. The charging box mainly serves the functions of accommodating electronic products and charging electronic products.

In the field of photographing, the charging box usually only serves the function of charging the camera, and its function is relatively simple, resulting in a poor user experience.

### Summary

The main technical problem solved by the embodiments of the present disclosure is to provide a charging box and photographing apparatus, aiming to solve the problem of the relatively simple function of the charging box in the related art.

To solve the above technical problem, one technical solution adopted by the embodiments of the present disclosure is: to provide a charging box, applicable to a photographing device, the charging box includes:
a box body, the photographing device can be detachably accommodated in the box body, the box body is signal-connected to the photographing device, and the box body is used to control the photographing device to capture images; and
a display screen, arranged at one end of the box body, the display screen is electrically connected to the box body, and the display screen is used to display images captured by the photographing device.

In some embodiments, the box body is provided with an accommodating cavity. The box body includes a housing, a circuit board, and an electrical connector. The accommodating cavity is arranged in the housing. The housing is further provided with a mounting cavity on a side away from the accommodating cavity, and the circuit board is accommodated in the mounting cavity. The electrical connector is electrically connected to the circuit board. The electrical connector is arranged in the mounting cavity and one end of the electrical connector is embedded in the housing, and when the photographing device is accommodated in the accommodating cavity, the photographing device contacts/engages the electrical connector to establish an electrical connection.

In some embodiments, the box body further includes a battery. The battery is accommodated in the housing. The battery is electrically connected to the circuit board, and the battery is used to provide power.

In some embodiments, the box body further includes a control button, the control button is arranged on the housing, the control button is electrically connected to the circuit board, and the control button is used to control the photographing device.

In some embodiments, the box body further includes a communication module. The communication module is arranged on the housing. The communication module is electrically connected to the circuit board, and the communication module is used to establish a signal connection with the photographing device.

In some embodiments, the display screen is rotatably connected to the box body to be fitted with the box body or connected to the box body at an angle. The display screen includes a display surface, and when the display screen is fitted with the box body, the display surface is disposed opposite to the accommodating cavity.

In some embodiments, the box body further includes a speaker. The speaker is accommodated in the mounting cavity, and the speaker is electrically connected to the circuit board.

In some embodiments, the box body further includes a vibrating element. The vibrating element is arranged in the mounting cavity, and the vibrating element is electrically connected to the circuit board.

In some embodiments, one side of the housing is provided with a connecting portion. At least two connecting portions are arranged. The two connecting portions are arranged at intervals, and the connecting portion is used to provide a connection basis for an external release/quick-release device, so that the quick-release device is connected to the housing.

In some embodiments, the box body further includes a first magnet and a second magnet, the first magnet is embedded in the housing, and the first magnet is used to magnetically attract the quick-release device; and
the second magnet is arranged in the mounting cavity and corresponds to the accommodating cavity, and the second magnet is used to magnetically attract the photographing device.

In some embodiments, the box body further includes a clamping member. The clamping member is arranged in the accommodating cavity and is rotatably disposed relative to the housing. The clamping member is used to rotate to clamp the photographing device in the accommodating cavity, or to allow the photographing device to exit the accommodating cavity.

In some embodiments, the box body further includes a trigger and a switch. The trigger is accommodated in the mounting cavity. One end of the trigger penetrates the cavity wall of the mounting cavity and extends into the accommodating cavity. The switch is arranged in the mounting cavity and disposed opposite to the trigger. The switch is electrically connected to the circuit board; when the photographing device is accommodated in the accommodating cavity. The trigger moves toward the switch and causes the switch to generate an electrical signal indicating that the photographing device is accommodated in the accommodating cavity.

In some embodiments, the housing includes an outer frame, an inner frame, and a middle frame. The outer frame is sleeved on the inner frame. The middle frame is arranged between the outer frame and the inner frame, and the material of the middle frame is metal.

The embodiments of the present disclosure further provide photographing apparatus, including:
a photographing device; and
the charging box as described in any of the above, where the photographing device can be detachably accommodated in the charging box.

In some embodiments, when the photographing device is detached from or accommodated in the charging box, the display screen can selectively display images/videos captured by the photographing device.

In some embodiments, the display screen is a touch display screen and can be used to control the photographing device.

In some embodiments, when the charging box establishes a communication connection or an electrical connection with the photographing device, the charging box generates a vibration to provide feedback to a user.

The beneficial effects of the embodiments of the present disclosure are as follows. Different from the situation in the related art, the embodiments of the present disclosure provide a charging box and photographing apparatus. The charging box is applicable to a photographing device. The charging box includes a box body and a display screen. The box body is provided with an accommodating cavity, and the photographing device can be detachably accommodated in the accommodating cavity. The box body is electrically connected or signal-connected to the photographing device, and when the photographing device is accommodated in the accommodating cavity, the box body is electrically connected to the photographing device to transmit electric power and electrical signals. When the photographing device is taken out from the accommodating cavity, the box body is signal-connected to the photographing device, and there is an electrical connection or signal connection between the box body and the photographing device. The housing controls the photographing device to capture images through electrical signals. When the photographing device is accommodated in the accommodating cavity, the electrical connection between the box body and the photographing device can be configured to charge the photographing device, and the box body can be used to control the charging of the photographing device. The display screen is arranged at one end of the box body. The display screen is electrically connected to the box body, and the display screen is used to display images captured by the photographing device. When the photographing device is accommodated in the accommodating cavity, the photographing device is electrically connected to the box body. The photographing device transmits the captured image information to the box body, and the box body then transmits the image information to the display screen, so that when the photographing device is accommodated in the accommodating cavity, the display screen can display the images captured by the photographing device. When the photographing device is taken out from the accommodating cavity, the photographing device transmits the captured image information to the box body through a signal connection, and the box body then transmits the image information to the display screen, so that when the photographing device is separated from the box body, the display screen can still display the images captured by the photographing device. Compared with the charging box in the related art, the charging box proposed in the present disclosure has the function of displaying captured images, and regardless of whether the photographing device is accommodated in the accommodating cavity of the box body, the display screen of the charging box can display the images captured by the photographing device to provide a photographing preview, which can help the user to capture higher quality videos or photos.

### Brief Description of Drawings

In order to more clearly illustrate the specific embodiments of the present disclosure or the technical solutions in the related art, the drawings required for the description of the specific embodiments or the related art will be briefly introduced below. In all the drawings, similar elements or parts are generally identified by similar reference numerals. In the drawings, the elements or parts are not necessarily drawn to actual scale.
FIG. 1 is a perspective view of a photographing apparatus, in which a photographing device is accommodated in a charging box, according to some embodiments of the present disclosure.
FIG. 2 is another perspective view of the photographing apparatus having the photographing device and the charging box, according to some embodiments of the present disclosure.
FIG. 3 is a perspective view of the charging box, according to some embodiments of the present disclosure.
FIG. 4 is a top view of the charging box, according to some embodiments of the present disclosure.
FIG. 5 is a schematic diagram of a partial structure of the charging box, in which a cavity wall of an accommodating cavity is omitted, according to some embodiments of the present disclosure.
FIG. 6 is an exploded view of the charging box, according to some embodiments of the present disclosure.
FIG. 7 is a rear view of FIG. 6, according to some embodiments of the present disclosure.
FIG. 8 is a sectional view along A-A of FIG. 4, according to some embodiments of the present disclosure.
FIG. 9 is another schematic diagram of a partial structure of the charging box according to some embodiments of the present disclosure, in which the components related to the clamping member are mainly illustrated.
FIG. 10 is a sectional view along B-B of FIG. 4, according to some embodiments of the present disclosure.
FIG. 11 is a schematic diagram of the usage state of the display screen of the charging box, according to some embodiments of the present disclosure.

### Reference Numerals:

100, charging box; 1, box body; 11, housing; 111, outer frame; 112, inner frame; 113, middle frame; 114, accommodating cavity; 115, mounting cavity; 12, circuit board; 13, electrical connector; 14, battery; 15, control button; 151, shutter button; 152, power button; 153, switching button; 16, communication module; 17, speaker; 18, vibrating element; 19, connecting portion; 20, first magnet; 21, second magnet; 22, clamping member; 221, rotating shaft; 222, reset torsion spring; 223, unlocking button; 224, reset spring; 23, trigger; 24, switch; 3, display screen; 31, display surface; 200, photographing device; 1000, photographing apparatus.

### Detailed Description

In order to facilitate understanding of the embodiments of the present disclosure, the embodiments of the present disclosure will be described in more detail below in conjunction with the accompanying drawings and specific embodiments. It should be noted that when an element is described as being "fixed to" another element, it may be directly on the other element, or one or more intervening elements may be present therebetween. When an element is described as being "connected" to another element, it may be directly connected to the other element, or one or more intervening elements may be present therebetween. The terms "vertical," "horizontal," "left," "right," and similar expressions used in this specification are for illustrative purposes only.

Unless otherwise defined, all technical and scientific terms used in this specification have the same meaning as commonly understood by those skilled in the art to which the embodiments of the present disclosure belong. The terms used in the specification of the embodiments of the present disclosure are only for the purpose of describing specific embodiments and are not intended to limit the embodiments of the present disclosure. The term "and/or" as used in this specification includes any and all combinations of one or more of the associated listed items.

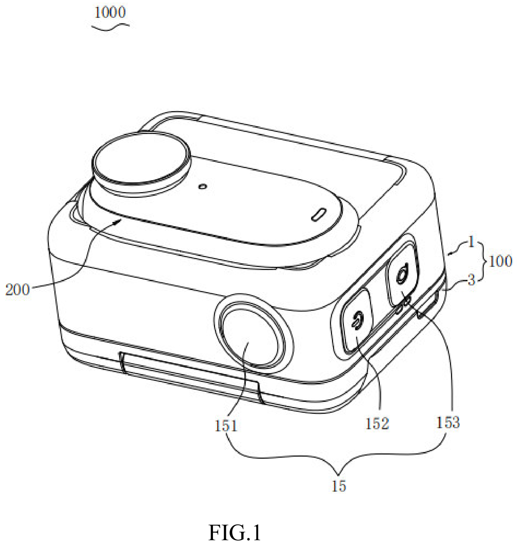

Please refer to FIG. 1 to FIG. 3. In some aspects, the present disclosure provides a charging box 100. The charging box 100 is applicable to a photographing device 200. The photographing device 200 includes but is not limited to an action camera, a drone, a camera, and the like. The charging box 100 includes a box body 1 and a display screen 3. The box body 1 is substantially rectangular, and the box body 1 is provided with an accommodating cavity 114. The photographing device 200 can be detachably accommodated in the accommodating cavity 114, that is, the photographing device 200 can be accommodated in the accommodating cavity 114 and can also be taken out from the accommodating cavity 114.

The box body 1 is electrically connected or signal-connected to the photographing device 200. In some examples, when the photographing device 200 is accommodated in the accommodating cavity 114, and the box body 1 is electrically connected to the photographing device 200 to transmit electric power and electrical signals. When the photographing device 200 is taken out from the accommodating cavity 114, the box body 1 is signal-connected to the photographing device 200, and the signal connection can be established by means such as Bluetooth and WIFI. It can be understood that the specific signal connection method between the box body 1 and the photographing device 200 is not limited to Bluetooth and WIFI, which are only examples and should not be construed as limiting the embodiments of the present disclosure.

As there exists an electrical connection or signal connection between the box body 1 and the photographing device 200, the housing 11 can control the photographing device 200 to capture images through electrical signals. When the photographing device 200 is accommodated in the accommodating cavity 114, the electrical connection between the box body 1 and the photographing device 200 can be configured to charge the photographing device 200, and the box body 1 can be configured to control the charging of the photographing device 200.

Please refer to FIG. 1. The display screen 3 is arranged at one end of the box body 1. The display screen 3 is electrically connected to the box body 1, and the display screen 3 is configured to display images captured by the photographing device 200. In some embodiments, when the photographing device 200 is accommodated in the accommodating cavity 114, the photographing device 200 is electrically connected to the box body 1, and the photographing device 200 transmits the captured image information to the box body 1, and the box body 1 then transmits the image information to the display screen 3. Accordingly, when the photographing device 200 is accommodated in the accommodating cavity 114, the display screen 3 can display the images captured by the photographing device 200.

When the photographing device 200 is taken out from the accommodating cavity 114, the photographing device 200 transmits the captured image information to the box body 1 through a signal connection, and the box body 1 then transmits the image information to the display screen 3. Consequently, when the photographing device 200 is separated from the box body 1 (taken out from the accommodating cavity 114), the display screen 3 can still display the images captured by the photographing device 200.

Compared with the charging box 100 in the related art, the charging box 100 proposed in the present disclosure has the function of displaying captured images, and regardless of whether the photographing device 200 is accommodated in the accommodating cavity 114 of the box body 1, the display screen 3 of the charging box 100 can display the images captured by the photographing device 200 to provide a photographing preview, thus helping the user capture higher quality videos or photos.

For example, in outdoor sports scenarios, the photographing device 200 is usually separated from the charging box 100; thus, the photographing device 200 can obtain more different viewing angles. For example, the photographing device 200 can be lifted by a selfie stick or a drone and the like. As the photographing device 200 is separated from the charging box 100, at this time, the display screen 3 of the charging box 100 can be configured to view the images captured by the photographing device 200, facilitating timely adjustment of the photographing angle of the photographing device 200 to obtain high-quality photos or videos.

When photographing indoors or in a fixed position, when it is not necessary to frequently adjust the position of the photographing device 200, the photographing device 200 can be accommodated in the accommodating cavity 114 of the charging box 100. The display screen 3 of the charging box 100 can be configured to view the images captured by the photographing device 200 to obtain a preview, therefore obtaining high-quality photos or videos. At the same time, the charging box 100 can also provide power for the photographing device 200, thereby increasing the usage time of the photographing device 200.

Regardless of whether the photographing device 200 is accommodated in the box body 1, the display screen 3 can display the images captured by the photographing device 200. This is not limited to the case where the display screen 3 is always configured to display the images captured by the photographing device 200. The display screen 3 can selectively display the images captured by the photographing device 200. In one embodiment, the display screen 3 is a touch display screen, and the user can control the photographing device 200 by touching the display screen 3, for example, adjusting the photographing parameters of the photographing device 200, switching the photographing mode of the photographing device 200, and so on.

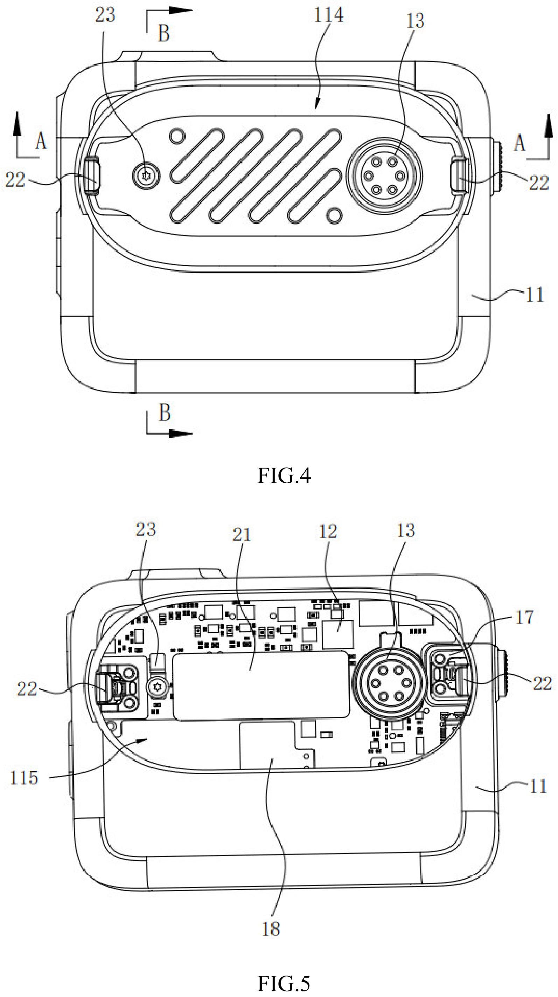

Please refer to FIG. 4 and FIG. 5. In some embodiments, the box body 1 includes a housing 11, a circuit board 12, and an electrical connector 13. The housing 11 is provided with an accommodating cavity 114, and the accommodating cavity 114 is provided with an opening to facilitate the placement and removal of the photographing device 200. The housing 11 is further provided with a mounting cavity 115 on a side away from the accommodating cavity 114, and the mounting cavity 115 is configured to provide installation space for other components. The circuit board 12 is configured to provide an electrical connection basis, and the circuit board 12 is accommodated in the mounting cavity 115. The electrical connector 13 is configured to transmit electric power and electrical signals. The electrical connector 13 is arranged in the mounting cavity 115. One end of the electrical connector 13 is embedded in the surface of the housing 11, and the other end of the electrical connector 13 is electrically connected to the circuit board 12. Therefore, when the photographing device 200 is accommodated in the accommodating cavity 114, the photographing device 200 contacts the electrical connector 13 to establish an electrical connection.

Correspondingly, the photographing device 200 is provided with an exposed electrode or plug at a position corresponding to the electrical connector 13. When the photographing device 200 is accommodated in the accommodating cavity 114, the exposed electrode or plug contacts the electrical connector 13.

In some embodiments, the electrical connector 13 is a pogo pin (spring pin), which is a precision connector used in electronic products such as mobile phones and is widely used in semiconductor devices for connection. The pogo pin has the advantages of corrosion resistance, stability, and durability. In other embodiments, the electrical connector 13 may also be an electrode made of a conductor.

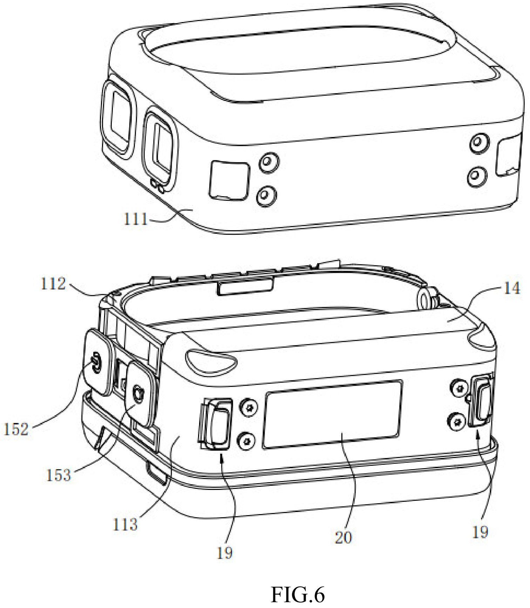

Please refer to FIG. 6. In some embodiments, the box body 1 further includes a battery 14. The battery 14 is arranged in the housing 11. The battery 14 is electrically connected to the circuit board 12, and the battery 14 is configured to provide power. In some embodiments, the battery 14 is configured to provide power to the display screen 3 and the photographing device 200. When the photographing device 200 is accommodated in the accommodating cavity 114, the battery 14 supplies power to the photographing device 200 through the electrical connector 13. The battery 14 may be a built-in rechargeable battery 14 or a detachable battery 14. In some embodiments, the battery 14 is accommodated in the mounting cavity 115.

Please refer to FIG. 1, FIG. 3, and FIG. 7. In some embodiments, the box body 1 further includes a control button 15. The control button 15 is arranged on the housing 11, and in some examples, the control button is arranged on the outer surface of the housing 11 to facilitate the user's operation of the control button 15. The control button 15 is electrically connected to the circuit board 12, and the control button 15 is configured to control the photographing device 200.

In some embodiments, when the photographing device 200 is accommodated in the accommodating cavity 114, since an electrical connection is established between the photographing device 200 and the charging box 100, pressing the control button 15 can control the photographing device 200. When the photographing device 200 is separated from the box body 1 (taken out from the accommodating cavity 114), as the photographing device 200 and the box body 1 are wirelessly connected, the information of pressing the control button 15 is transmitted to the photographing device 200 wirelessly, thereby realizing the control of the photographing device 200 to capture images.

In some embodiments, please refer to FIG. 1, the control button 15 includes a shutter button 151, a power button 152, and a switching button 153, where the shutter button 151 is configured to control the photographing device 200 to take photos or record videos. The power button 152 is configured to control the power on/off of the charging box 100, and the switching button 153 is configured to control the switching of the photographing device 200 between various modes and the selection among various parameters.

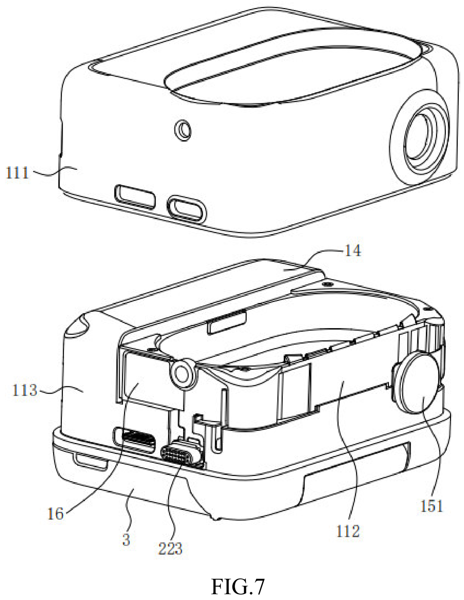

Please refer to FIG. 7. In some embodiments, the box body 1 further includes a communication module 16. The communication module 16 is arranged on the housing 11. The communication module 16 is electrically connected to the circuit board 12. The communication module 16 includes an antenna. The communication module 16 can transmit and receive electromagnetic waves, and the communication module 16 is configured to establish a signal connection with the photographing device 200, thereby establishing a signal connection between the photographing device 200 and the box body 1.

The working principle of the communication module 16 can refer to related technology. The communication module 16 can be embedded inside the housing 11 or attached to the surface of the housing 11. In some embodiments, the communication module 16 is an antenna, and the photographing device 200 and the box body 1 are signal-connected through Bluetooth, and the antenna is embedded inside the housing 11. In some embodiments, the signal connection method between the photographing device 200 and the box body 1 is not limited to Bluetooth connection, and may also be other connection methods such as wireless local area network.

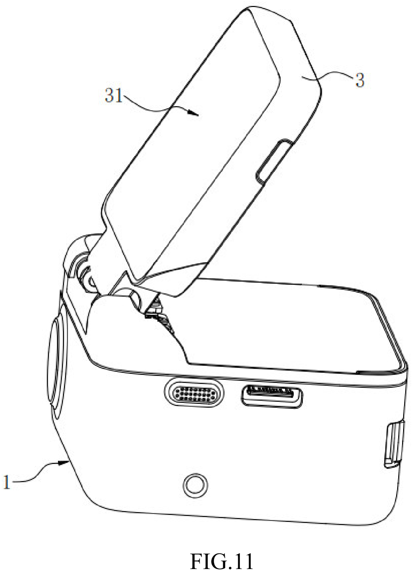

Please refer to FIG. 1 and FIG. 11. In some embodiments, the display screen 3 is rotatably connected to the box body 1 to be fitted with the box body 1 or connected to the box body 1 at an angle. The display screen 3 includes a display surface 31, and when the display screen 3 is flush-fitted with the box body 1, the display surface 31 is disposed opposite to the accommodating cavity 114.

During use, the display screen 3 is rotated so that there is an angle between the display surface 31 of the display screen 3 and the box body 1, thereby facilitating the user to view the display surface 31. After use, the display screen 3 is rotated to fit flush with the box body 1, so as to store the display screen 3 and make the display screen 3 and the box body 1 integrally arranged.

In some embodiments, the display surface 31 of the display screen 3 may also be arranged on the side of the display screen 3 facing the box body 1. The display screen 3 can be rotated relative to the box body 1 so that the display surface 31 fits with the box body 1 or is connected to the box body 1 at an angle. When the display screen 3 is opened, it is convenient for the user to observe. When the display screen 3 is closed, it can protect the display surface 31 and reduce the probability of damage due to impact.

Please refer to FIG. 5. In some embodiments, the box body 1 further includes a speaker 17. The speaker 17 is accommodated in the mounting cavity 115, and the speaker 17 is electrically connected to the circuit board 12. When the photographing device 200 is photographing a video, the sound in the video is played through the speaker 17 to provide a better experience for the user. The housing 11 is provided with a sound hole corresponding to the speaker 17 (not shown in the figure) to facilitate the transmission of the sound emitted by the speaker 17 to the outside of the box body 1.

Please refer to FIG. 5. In some embodiments, the box body 1 further includes a vibrating element 18. The vibrating element 18 is arranged in the mounting cavity 115. The vibrating element 18 is electrically connected to the circuit board 12, and the vibrating element 18 is configured to provide vibration. For example, when the photographing device 200 and the box body 1 have just established a communication connection or an electrical connection, the vibrating element 18 vibrates to provide feedback to the user. It can be understood that the application scenarios of the vibrating element 18 are not limited to this, and this is only an example and should not be construed as limiting the embodiments of the present disclosure. The vibrating element 18 includes but is not limited to a vibration motor, a linear motor, and the like.

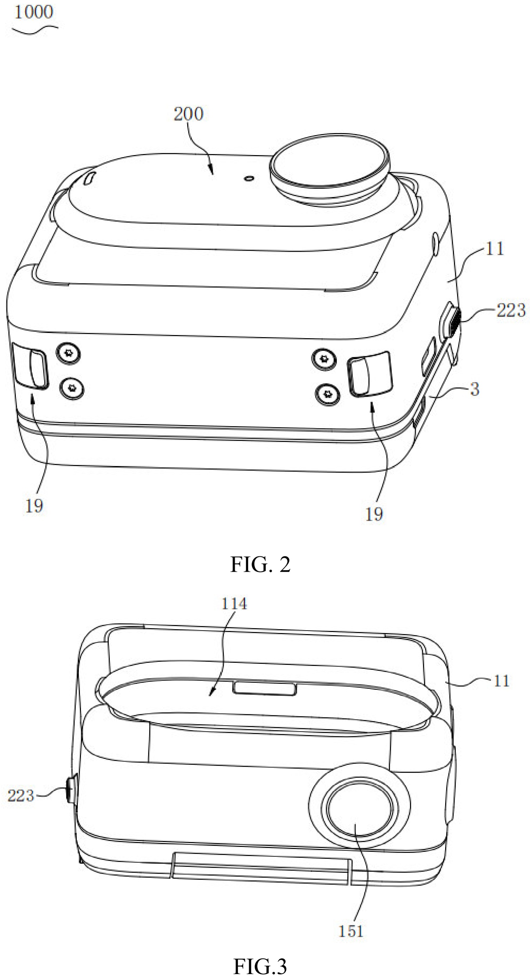

Please refer to FIG. 2 and FIG. 6. In some embodiments, one side of the housing 11 is provided with a connecting portion 19. At least two connecting portions 19 are arranged, and the two connecting portions 19 are arranged at intervals. The connecting portion 19 is configured to provide a connection basis for an external quick-release device (not shown in the figure). Accordingly, the quick-release device is connected to the housing 11. The quick-release device is usually an external functional module, which is configured to connect with a selfie stick or a tripod and the like. As such, when the box body 1 is connected with the quick-release device, it can be mounted on the selfie stick or the tripod through the quick-release device.

In some embodiments, the connecting portion 19 is a groove. Correspondingly, the quick-release device is provided with a movable hook, the opening angle of the hook of the quick-release device is adjusted, and then the hook is inserted into the slot, so that the quick-release device can be attached to the housing 11.

In some embodiments, the connecting portion 19 may also be a clamping protrusion (not shown in the figure). Correspondingly, the quick-release device is provided with a slot (not shown in the figure), and the quick-release device is mounted on the housing 11 through the cooperation of the clamping protrusion and the slot.

Please refer to FIG. 5 and FIG. 6. In some embodiments, the box body 1 further includes a first magnet 20 and a second magnet 21. The first magnet 20 is embedded in the housing 11. In some embodiments, the first magnet 20 can be embedded in the surface of the housing 11 or embedded in the interior of the housing 11. The first magnet 20 is configured to magnetically attract the quick-release device. Correspondingly, the quick-release device is provided with a part made of a ferromagnetic material corresponding to the first magnet 20, such as an iron block, a nickel block, and the like, which is configured be mutually attracted with the first magnet 20, thereby improving the connection strength between the quick-release device and the housing 11.

The first magnet 20 is arranged between the two connecting portions 19. When installing the quick-release device, two ends of the quick-release device are fixed by the connecting portions 19, and the middle part of the quick-release device close to the box body 1 is attached to the surface of the box body 1 under the attraction of the first magnet 20, which can increase the connection stability of the quick-release device.

In some embodiments, the quick-release device is provided with a magnet that is mutually attracted to the first magnet 20, and the magnetic pole of the magnet is opposite to the magnetic pole of the first magnet 20, so that a magnetic attraction force can be generated between the first magnet 20 and the magnet.

Please refer to FIG. 5. The second magnet 21 is arranged in the mounting cavity 115 and corresponds to the accommodating cavity 114, and the second magnet 21 is configured to magnetically attract the photographing device 200. Correspondingly, the quick-release device is provided with a part made of a ferromagnetic material corresponding to the first magnet 20, such as an iron block, a nickel block, and the like, which is configured to be mutually attracted with the first magnet 20, thereby reducing the probability of the photographing device 200 being separated from the accommodating cavity 114.

In some embodiments, the photographing device 200 is provided with a magnet that is mutually attracted to the first magnet 20, and the magnetic pole of the magnet is opposite to the magnetic pole of the first magnet 20, so that a magnetic attraction force can be generated between the first magnet 20 and the magnet.

Please refer to FIG. 4, FIG. 5, and FIG. 8. In some embodiments, the box body 1 further includes a clamping member 22. The clamping member 22 is arranged in the accommodating cavity 114, and the clamping member 22 is rotatably disposed relative to the housing 11. In some embodiments, one end of the clamping member 22 penetrates the cavity wall of the accommodating cavity 114 and enters the mounting cavity 115. When the photographing device 200 is accommodated in the accommodating cavity 114, the clamping member 22 rotates and clamps the photographing device 200 to reduce the probability of the photographing device 200 being separated from the accommodating cavity 114. When it is necessary to take out the photographing device 200 from the accommodating cavity 114, the clamping member 22 rotates and separates from the photographing device 200, so that the photographing device 200 can be taken out from the accommodating cavity 114.

In some embodiments, two clamping members 22 are provided, and the two clamping members 22 are respectively arranged on two opposite cavity walls of the accommodating cavity 114. When the photographing device 200 is accommodated in the accommodating cavity 114, the two clamping members 22 rotate and move toward each other to clamp the photographing device 200.

The clamping member 22 may be hook-shaped, sheet-shaped, block-shaped, or other irregular shapes. In this embodiment, the clamping member 22 is a hook, the end of the hook close to the opening of the accommodating cavity 114 is the top end, the top end of the hook is generally "L"-shaped, and the top end of the hook is arranged toward the center of the accommodating cavity 114 to clamp the photographing device 200.

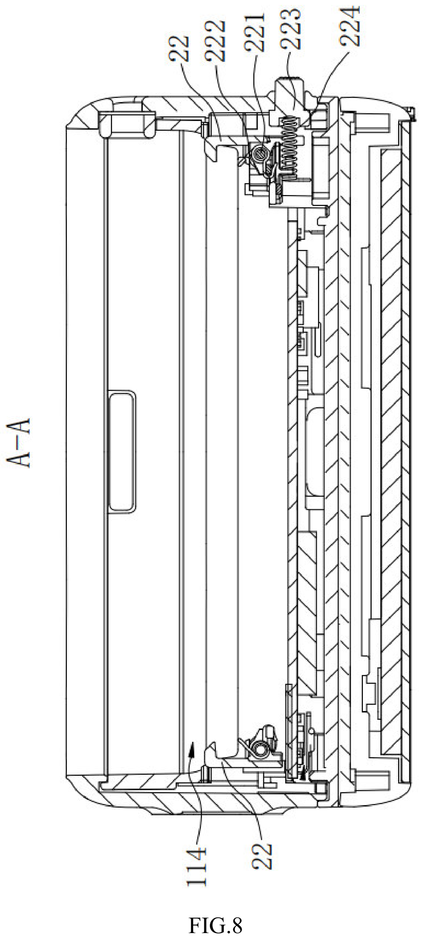

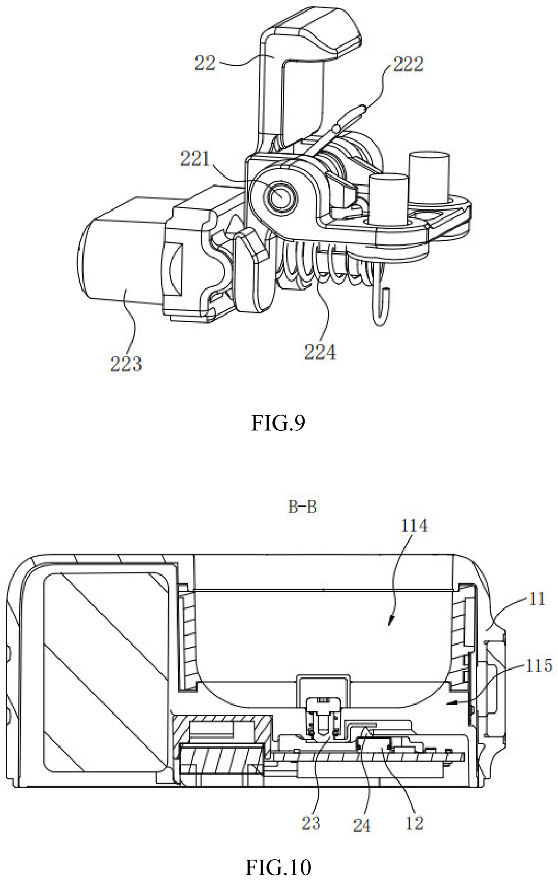

Please refer to FIG. 8 and FIG. 9. The box body 1 further includes a rotating shaft 221 and a reset torsion spring 222. The rotating shaft 221 is generally cylindrical and is arranged in the accommodating cavity 114. For convenience of description, the end of the clamping member 22 far from the opening of the accommodating cavity 114 is referred to as the bottom end, and the end of the clamping member 22 close to the opening of the accommodating cavity 114 is referred to as the top end. The rotating shaft 221 passes through the part between the top end and the bottom end of the clamping member 22, so that the clamping member 22 can rotate relative to the housing 11.

Please refer to FIG. 9. The reset torsion spring 222 is sleeved on the rotating shaft 221 and is arranged corresponding to the clamping member 22. When the top end of the clamping member 22 rotates toward the side close to the corresponding cavity wall, the reset torsion spring 222 generates a torque to restore the clamping member 22 to the initial position. During the process of placing the photographing device 200 into the accommodating cavity 114, the top end of the clamping member 22 first rotates toward the side close to the corresponding cavity wall, and at this time, the torque generated by the reset torsion spring 222 causes the top end of the clamping member 22 to abut against the photographing device 200. The two opposite clamping members 22 clamp the photographing device 200, which can reduce the probability of the photographing device 200 being separated from the accommodating cavity 114.

Please refer to FIG. 9. The box body 1 further includes an unlocking button 223, the unlocking button 223 penetrates the housing 11, and one end is located in the mounting cavity 115. For convenience of description, the end of the unlocking button 223 located in the mounting cavity 115 is referred to as the inner end, and the end of the unlocking button 223 located outside the housing 11 is referred to as the outer end. The inner end of the unlocking button 223 is arranged corresponding to the bottom end of the clamping member 22. When the outer end of the unlocking button 223 is pressed, the unlocking button 223 moves toward the inside of the mounting cavity 115 and pushes the bottom end of the clamping member 22. The bottom end of the clamping member 22 receives a pushing force, and the top end of the clamping member 22 rotates toward the side close to the cavity wall of the accommodating cavity 114. At this time, the clamping member 22 separates from the photographing device 200, thereby facilitating the user to take out the photographing device 200 from the accommodating cavity 114.

Please refer to FIG. 9. The box body 1 further includes a reset spring 224, one end of the reset spring 224 is fixed, and the other end of the reset spring 224 abuts against the unlocking button 223. When the unlocking button 223 is not pressed, the reset spring 224 is in its original length state, so that the outer end of the unlocking button 223 protrudes from the housing 11. When the unlocking button 223 is pressed, the reset spring 224 is in a compressed state. When the external force pressing the reset spring 224 disappears, the spring returns to its original length to provide an elastic force, so that the unlocking button 223 returns to the initial position.

Please refer to FIG. 4 and FIG. 10. In some embodiments, the box body 1 further includes a trigger 23 and a switch 24. The trigger 23 is accommodated in the mounting cavity 115, and one end of the trigger 23 penetrates the cavity wall of the mounting cavity 115 and extends into the accommodating cavity 114. The switch 24 is arranged in the mounting cavity 115 and is disposed opposite to the trigger 23, and the switch 24 is electrically connected to the circuit board 12. When the photographing device 200 is accommodated in the accommodating cavity 114, under the action of gravity of the photographing device 200, a force is applied to the trigger 23, and the trigger 23 moves toward the switch 24, causing the switch 24 to generate an electrical signal indicating that the photographing device 200 is accommodated in the accommodating cavity, so that an electrical connection is established between the box body 1 and the photographing device 200.

The switch 24 is a normally closed switch. Therefore, when the photographing device 200 is separated from the accommodating cavity 114, the switch 24 is not energized, which can avoid electrical corrosion caused by the switch 24 being energized for a long time.

Please refer to FIG. 6 and FIG. 7. In some embodiments, the housing 11 includes an outer frame 111, an inner frame 112, and a middle frame 113. The outer frame 111 is the outer edge of the housing 11, and the inner frame 112 is the inner edge of the housing 11. The outer frame 111 is sleeved on the inner frame 112. The middle frame 113 is arranged between the outer frame 111 and the inner frame 112, and the material in the middle is metal. Therefore, the middle frame 113 can absorb the heat emitted by the conductive components in the mounting cavity 115 and radiate the heat outward through the middle frame 113 to increase the heat dissipation effect of the box body 1. The middle frame 113 has a large surface area to increase the heat dissipation effect.

Correspondingly, the communication module 16 is arranged on the surface of the inner frame 112, and the communication module 16 may have a certain surface area to increase the ability of the communication module 16 to receive and transmit signals.

Correspondingly, the battery 14 is accommodated in the middle frame 113 to fix the battery 14.

In summary, the present disclosure provides a charging box 10. The charging box 100 is applicable to a photographing device 200, and the charging box 100 includes a box body 1 and a display screen 3. The box body 1 is provided with an accommodating cavity, and the photographing device 200 can be detachably accommodated in the accommodating cavity 114. The box body 1 is electrically connected or signal-connected to the photographing device 200. When the photographing device 200 is accommodated in the accommodating cavity 114, the box body 1 is electrically connected to the photographing device 200 to transmit electric power and electrical signals.

When the photographing device 200 is taken out from the accommodating cavity 114, the box body 1 is signal-connected to the photographing device 200. As there is always an electrical connection or signal connection between the box body 1 and the photographing device 200, the photographing device 200 can be controlled to capture images through electrical signals between the housing 11 and the photographing device 200. When the photographing device 200 is accommodated in the accommodating cavity 114, the electrical connection between the box body 1 and the photographing device 200 can be configured to charge the photographing device 200. Therefore, the box body 1 can be configured to control the charging of the photographing device 200.

The display screen 3 is arranged at one end of the box body 1, the display screen 3 is electrically connected to the box body 1, and the display screen 3 is configured to display images captured by the photographing device 200. When the photographing device 200 is accommodated in the accommodating cavity 114, the photographing device 200 is electrically connected to the box body 1, and the photographing device 200 transmits the captured image information to the box body 1, and the box body 1 then transmits the image information to the display screen 3, so that when the photographing device 200 is accommodated in the accommodating cavity 114, the display screen 3 can display the images captured by the photographing device 200. When the photographing device 200 is taken out from the accommodating cavity 114, the photographing device 200 transmits the captured image information to the box body 1 through a signal connection, and the box body 1 then transmits the image information to the display screen 3, so that when the photographing device 200 is separated from the box body 1, the display screen 3 can still display the images captured by the photographing device 200.

Compared with the related art, the charging box 100 proposed in the present disclosure has the function of displaying captured images, and regardless of whether the photographing device 200 is accommodated in the accommodating cavity 114 of the box body 1, the display screen 3 of the charging box 100 can display the images captured by the photographing device 200 to provide a photographing preview, which can help the user to capture higher quality videos or photos.

Please refer to FIG. 1, FIG. 2, and FIG. 3. In some embodiments, the present disclosure further provides a photographing apparatus 1000. The photographing apparatus 1000 includes a photographing device 200 and the above charging box 100. The structure of the charging box 100 is described above, and the specific structure will not be described in detail herein.

The photographing device 200 has a photographing function and a wireless communication function. When the photographing device 200 is accommodated in the charging box 100, the photographing device 200 and the charging box 100 are electrically connected to transmit electric power and electrical signals, so that the charging box 100 can charge the photographing device 200 and can control the photographing device 200 to capture images. The photographing device 200 transmits the captured images to the display screen 3 of the charging box 100 to facilitate photographing preview. When the photographing device 200 is separated from the charging box 100, the photographing device 200 is signal-connected to the charging box 100, the photographing device 200 transmits the captured images to the box body 1 of the charging box 100, and the box body 1 then transmits the electrical signals to the display screen 3 to facilitate photographing preview, which can help the user to capture higher quality videos or photos.

It should be noted that the specification and drawings of the embodiments of the present disclosure provide preferred embodiments of the present disclosure, but the embodiments of the present disclosure can be implemented in many different forms and are not limited to the embodiments described in this specification. These embodiments are not intended to be additional limitations on the content of the embodiments of the present disclosure. The purpose of providing these embodiments is to make the disclosure of the embodiments of the present disclosure more thorough and comprehensive. Furthermore, the above technical features continue to be combined with each other to form various embodiments not listed above, all of which are regarded as within the scope described in the specification of the embodiments of the present disclosure. Furthermore, those skilled in the art can make improvements or changes based on the above description, and all such improvements and changes should fall within the scope of protection of the claims of the embodiments of the present disclosure.

## Claims

1. A charging box, applicable to a photographing device, **characterized in that** the charging box comprises:
a box body, wherein the photographing device is detachably accommocated in the box body, the box body is signal-connected to the photographing device, and the box body is configured to control the photographing device for capturing images; and
a display screen, arranged at one end of the box body, wherein the display screen is electrically connected to the box body, and the display screen is configured to display the images captured by the photographing device.

2. The charging box according to claim 1, **characterized in that**, wherein the box body is provided with an accommodating cavity, the box body comprises a housing, a circuit board, and an electrical connector, the accommodating cavity is arranged in the housing, the housing is further provided with a mounting cavity on a side away from the accommodating cavity, and the circuit board is accommodated in the mounting cavity; and
wherein the electrical connector is electrically connected to the circuit board, the electrical connector is arranged in the mounting cavity and one end of the electrical connector is embedded in the housing, and when the photographing device is accommodated in the accommodating cavity, the photographing device contacts the electrical connector to establish an electrical connection.

3. The charging box according to claim 2, **characterized in that**, wherein the box body further comprises a battery, the battery is accommodated in the housing, the battery is electrically connected to the circuit board, and the battery is configured to provide power.

4. The charging box according to claim 3, **characterized in that**, wherein the box body further comprises a control button, the control button is arranged on the housing, the control button is electrically connected to the circuit board, and the control button is configured to control the photographing device.

5. The charging box according to claim 4, **characterized in that**, wherein the box body further comprises a communication module, the communication module is arranged on the housing, the communication module is electrically connected to the circuit board, and the communication module is configured to establish a signal connection with the photographing device.

6. The charging box according to claim 1, **characterized in that**, wherein the display screen is rotatably connected to the box body to be flush-fitted with the box body or connected to the box body at an angle, the display screen comprises a display surface, and when the display screen is flush-fitted with the box body, the display surface is disposed opposite to the accommodating cavity.

7. The charging box according to claim 2, **characterized in that**, wherein the box body further comprises a speaker, the speaker is accommodated in the mounting cavity, and the speaker is electrically connected to the circuit board.

8. The charging box according to claim 7, **characterized in that**, wherein the box body further comprises a vibrating element, the vibrating element is arranged in the mounting cavity, and the vibrating element is electrically connected to the circuit board.

9. The charging box according to claim 2, **characterized in that**, wherein one side of the housing is provided with a connecting portion, at least two connecting portions are arranged, the two connecting portions are arranged at intervals, and the connecting portion is configured to provide a connection basis for an external quick-release device, so that the quick-release device is connected to the housing.

10. The charging box according to claim 9, **characterized in that**, wherein the box body further comprises a first magnet and a second magnet, the first magnet is embedded in the housing, and the first magnet is configured to magnetically attract the quick-release device; and
wherein the second magnet is arranged in the mounting cavity and corresponds to the accommodating cavity, and the second magnet is configured to magnetically attract the photographing device.

11. The charging box according to claim 2, **characterized in that**, wherein the box body further comprises a clamping member, and the clamping member is arranged in the accommodating cavity and is rotatably disposed relative to the housing; and
wherein the clamping member is configured to rotate to clamp the photographing device in the accommodating cavity, or to allow the photographing device to exit the accommodating cavity.

12. The charging box according to claim 2, **characterized in that**, wherein the box body further comprises a trigger and a switch, the trigger is accommodated in the mounting cavity, one end of the trigger penetrates the cavity wall of the mounting cavity and extends into the accommodating cavity;
wherein the switch is arranged in the mounting cavity and disposed opposite to the trigger, and the switch is electrically connected to the circuit board; and
wherein when the photographing device is accommodated in the accommodating cavity, the trigger moves towards the switch and causes the switch to generate an electrical signal indicating that the photographing device is accommodated in the accommodating cavity.

13. The charging box according to claim 1, **characterized in that**, wherein the housing comprises an outer frame, an inner frame, and a middle frame, the outer frame is sleeved on the inner frame, the middle frame is arranged between the outer frame and the inner frame, and the middle frame is made of metal.

14. A photographing apparatus, **characterized in that**, the photographing apparatus comprises:
a photographing device; and
the charging box according to any one of claims 1 to 13, wherein the photographing device is detachably accommodated in the charging box.

15. The photographing apparatus according to claim 14, **characterized in that**, wherein when the photographing device is detached from or accommodated in the charging box, the display screen is configured to optionally display images/videos captured by the photographing device.

16. The photographing apparatus according to claim 14, **characterized in that**, wherein the display screen is a touch display screen and is configured to control the photographing device.

17. The photographing apparatus according to claim 14, **characterized in that**, wherein when the charging box establishes a communication connection or an electrical connection with the photographing device, the charging box generates a vibration to provide feedback to a user.
